# EUROPEAN PATENT SPECIFICATION

(11) **EP 2 991 752 B1**
(45) Date of publication and mention of the grant of the patent: **05.06.2019**
(21) Application number: 14792052.4
(22) Date of filing: 04.04.2014
(51) Int. Cl.: B01D 53/14, B01D 53/62, C01B 25/00

(54) **MIXTURES OF PHYSICAL ABSORPTION SOLVENTS AND IONIC LIQUIDS FOR GAS SEPARATION**
MISCHUNGEN VON PHYSIKALISCHEN ABSORPTIONSLÖSUNGSMITTELN UND IONISCHE FLÜSSIGKEITEN ZUR GASTRENNUNG
MÉLANGES DE SOLVANTS D'ABSORPTION PHYSIQUE ET LIQUIDES IONIQUES POUR LA SÉPARATION DE GAZ

(30) Priority: 30.04.2013 US 201313873804; 30.04.2013 US 201313873823
(43) Date of publication of application: 09.03.2016
(73) Proprietor: UOP LLC, Des Plaines, Illinois 60017-5017 (US)
(72) Inventor: BRODERICK, Erin M., Des Plaines, Illinois 60017-5017 (US); BHATTACHARYYA, Alakananda, DesPlaines, Illinois 60017-5017 (US)
(74) Representative: Boult Wade Tennant LLP
(86) International application number: PCT/US2014/032903
(87) International publication number: WO 2014/178991

(56) References cited:
- WO-A2-02/094883
- CN-A- 101 745 290
- DE-A1-102009 000 543
- DE-A1-102010 028 480
- FR-A1- 2 881 361
- JP-A- 2008 296 211
- JP-A- 2010 248 052
- JP-A- 2013 017 993
- US-A1- 2012 088 292
- US-A1- 2012 167 766
- US-A1- 2013 078 170
- AHMADY ET AL.: 'Kinetics of Carbon Dioxide absorption into aqueous MDEA + [ bmim][BF4] solutions from 303 to 333 K' CHEMICAL ENGINEERING JOURNAL vol. 200, no. 202, 2012, pages 317 - 328, XP055291486

## Description

### BACKGROUND OF THE INVENTION

The separation of carbon dioxide from gas mixtures, such as natural gas, flue gas, syngas and shale gas, is of industrial importance. The removal of carbon dioxide is necessary to improve the fuel quality of the natural gas or to use syngas. In addition, the combination of carbon dioxide and water can be corrosive to metal pipes, which makes the removal of CO₂ necessary for transportation of natural gas. Also, carbon dioxide is a greenhouse gas that needs to be captured from flue gases to avoid harming the environment.

Current removal technologies, such as physical absorption solvents methanol, N-methylpyrrolidone, dimethyl ether of polyethylene glycol, and propylene carbonate, have many drawbacks. Common issues with these solvent removal systems are low operating temperatures and high operating pressures. In addition, effluent washes may be needed for solvents lost in the stream. Physical absorption solvents tend to be favored over chemical solvents when the concentration of acid gases or other impurities is very high. Unlike chemical solvents, physical absorption solvents are non-corrosive, requiring only carbon steel construction.

In recent years, it has been found that some ionic liquids are useful in the capture of carbon dioxide. For example, in WO 201217183, a process was disclosed for separating carbon dioxide from a gaseous stream through chemisorption by 1-ethyl-3-methylimidazolium (emim) or 1-propyl-3-methylimidazolium (pmim) containing ionic liquids with a carboxylate salt and the presence of guanidinium acetate or 1-butyl-3-methylimidazolium (bmim) acetate.

In addition, prior art has described the use of amine solutions combined with ionic liquids for removal of carbon dioxide and other impurities (US 2012/0063978 A1).

There are four types of physical absorption solvents that are used for the purification of gas mixtures. These include dimethyl ether of polyethylene (DEPG), methanol, N-methyl-pyrrolidone (NMP) and propylene carbonate (PC).

Dimethyl ether of polyethylene glycol (DEPG) is a mixture of dimethyl ethers of polyethylene glycol (CH₃O(C₂H₄O)ₙCH₃ (where n is between 2 and 9) used to physically absorb H₂S, CO₂, and mercaptans from gas streams. Solvents containing DEPG are licensed, manufactured, or used in processes by several companies including Coastal Chemical Company (as Coastal AGR), Dow (Selexol), and UOP (Selexol process). Other process suppliers such as Clariant GmbH of Germany offer similar solvents. Clariant solvents are a family of dialkyl ethers of polyethylene glycol under the Genosorb® name. DEPG can be used for selective H₂S removal which requires stripping, vacuum stripping, or a reboiler. The process can be configured to yield both a rich H₂S feed to the Claus unit as well as bulk CO₂ removal. Selective H₂S removal with deep CO₂ removal usually requires a two-stage process with two absorption and regeneration columns. H₂S is selectively removed in the first column by a lean solvent that has been thoroughly stripped with steam, while CO₂ is removed in the second absorber. The second stage solvent can be regenerated with air or nitrogen for deep CO₂ removal, or using a series of flashes if bulk CO₂ removal is required. DEPG also dehydrates the gas and removes HCN. Compared to the other solvents, DEPG has a higher viscosity which reduces mass transfer rates and tray efficiencies and increases packing or tray requirements, especially at reduced temperatures.

There are a number of methanol processes for acid gas removal including the Rectisol process (licensed by Lurgi AG) and Ifpexol® (Prosemat). The Rectisol process was the earliest commercial process based on an organic physical absorption solvent and is widely used for synthesis gas applications. The process operates at a very low temperature and is complex compared to other physical absorption solvent processes. The main application for the Rectisol process is purification of synthesis gases derived from the gasification of heavy oil and coal rather than natural gas treating applications. The two-stage Ifpexol process can be used for natural gas applications. Ifpex-1 removes condensable hydrocarbons and water, and Ifpex-2 removes acid gas. Methanol has a relatively high vapor pressure at normal process conditions, so deep refrigeration or special recovery methods are required to prevent high solvent losses. Water washing of 3 effluent streams is often used to recover the methanol. The Rectisol process typically operates below 32°F (0°C) and may be operated at temperatures as low as -95°F (-70.5°C). The process usually operates between -40°F and - 80°F (-40°C and -62°C).

Solubilities of H₂S and COS in methanol are higher than in DEPG. Rectisol's complex flow scheme and the need to refrigerate the solvent can be disadvantages with respect to higher capital and operating costs. The supply of refrigeration at low temperatures requires much power. However, this disadvantage can be outweighed by a considerable reduction of the solvent flow rate for CO₂ removal as compared to other physical absorption solvent processes. Acid gas solubility in physical absorption solvents increases significantly as the temperature decreases. Low temperature also reduces solvent losses by lowering the vapor pressure of the methanol in the product streams. If H₂S is to be removed from a gas with CO₂ remaining in the treated gas, DEPG and NMP are more suitable than methanol.

The Purisol Process which uses NMP (N-methyl-2-pyrrolidone) is licensed by Lurgi AG. The flow schemes used for this solvent are similar to those used for DEPG. The process can be operated either at ambient temperature or with refrigeration down to 5°F (-15°C). NMP has a relatively high vapor pressure compared to DEPG or PC, and the licensor recommends water washing of both the treated gas and the rejected acid gases for solvent recovery. Obviously, NMP cannot be used for simultaneous gas dehydration if a water wash is used. In general, NMP recovery with water is not necessary if the Purisol process is operated at subambient temperatures. NMP has been reported to have the highest selectivity of all the physical absorption solvents considered here for H₂S over CO₂. COS is not as soluble as H₂S, but it is hydrolyzed by the NMP solvent. The Purisol process is particularly well suited to the purification of high-pressure, high CO₂ synthesis gas for gas turbine integrated gasification combined cycle (IGCC) systems because of the high selectivity for H₂S.

The Fluor Solvent process which uses propylene carbonate (PC) is licensed by Fluor Daniel, Inc. and has been in use since the late 1950's. PC is available as JEFFSOL® PC solvent and is particularly advantageous in treating syngas. PC has an advantage over the other solvents when little or no H₂S is present and CO₂ removal is important. PC has lower solubilities of the gas being purified: light hydrocarbons in natural gas and hydrogen in synthesis gas. This lower solubility results in lower recycle gas compression requirements for the gas flashed from the rich solvent at intermediate pressures, and lower hydrocarbon losses in the CO₂ vent gas stream.

Ionic liquids are capable of solubilizing or reacting with polar molecules. Ionic liquids are comprised of a cation and anion and are liquid at or below the process temperature. Ionic liquids characteristically are non-flammable, non-degradable, viscous, thermally stable and have a low vapor pressure. Many of these characteristics would be solutions to the problems of current carbon dioxide removal technology. While many of the characteristics of ionic liquids are beneficial, the high viscosity of ionic liquids may be challenging. It has now been found that ionic liquids can be added to physical absorption solvents in a variety of weight percents to alleviate the viscosity issue, and improve the performance of the solvent.

US 2013/078170 A1 discloses phosphonium-based ionic liquids and their use in the capture of polluting gases.

FR 2881361 A1 discloses a combustion gas treatment procedure using solvent to trap acid compounds followed by contact with ionic non-aqueous liquid to extract solvent.

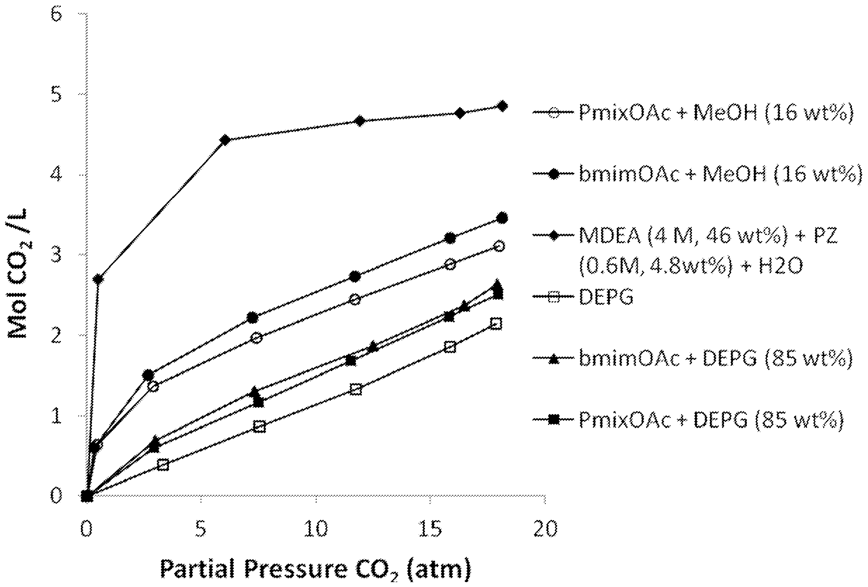

### BRIEF DESCRIPTION OF THE DRAWING

The FIGURE shows the isotherms using a physical absorption solvent as a control and mixtures of physical absorption solvents with ionic liquids.

### DESCRIPTION OF THE INVENTION

The invention involves a composition comprising an ionic liquid and a physical absorption solvent in accordance with claim 1. The physical absorption solvents that may be used are dimethyl ethers of polyethylene glycol and methanol. The ionic liquid is a phosphonium acetate ionic liquid. The composition may further comprise water.

The composition may comprise 1-99 vol% ionic liquid and 1-99 vol% absorption solvent. It may comprise 5-95 vol% ionic liquid and 5-95 vol% physical absorption solvent. In other embodiments, the composition comprises 25-75 vol% of the ionic liquid and 25-75 vol% of the physical absorption solvent. In another embodiment of the invention, the composition comprises 40-60 vol% of the ionic liquid and 40-60 vol% of the physical absorption solvent.

The invention also comprises the method of purifying gaseous mixtures by use of these compositions. This method comprises contacting a gas mixture with a mixture of an ionic liquid and a physical absorption solvent in an absorbent zone wherein the ionic liquid and physical absorption solvent mixture absorbs at least one component from said gas mixture, and then the ionic liquid and physical absorption solvent mixture is regenerated to remove the absorbed component or components. The method is useful for carbon dioxide containing gas mixtures. Among the gas mixtures that may be treated are natural gas, flue gas, syngas, and shale gas.

In the method, the physical absorption solvents that may be used are dimethyl ethers of polyethylene glycol and methanol. The ionic liquids
are phosphonium acetate ionic liquids. The composition may further comprise water. The mixture of physical absorption solvent and ionic liquid may comprise from 5-95 vol% ionic liquid and from 5-95 vol% physical absorption solvent. In another embodiment, the mixture comprises from 25-75 vol% of the ionic liquid and from 25-75 vol% of the physical absorption solvent. The mixture may comprise from 40-60 vol% of said ionic liquid and from 40-60 vol% of said physical absorption solvent. The method is particularly useful for gas mixtures containing carbon dioxide. Among the gas mixtures that may be treated are natural gas, flue gas, syngas, and shale gas.

The addition of an ionic liquid to a physical absorption solvent has the capability to eliminate the need for refrigeration and effluent washing. The addition of ionic liquids to physical absorption solvents at a range of concentrations demonstrates an increase in performance compared to the physical absorption solvents. Among the benefits of ionic liquid addition to physical absorption solvent are an increased performance in capacity and a lower possible operating pressure.

As described herein, a phosphonium or imidazolium based ionic liquid is added to a physical absorption solvent. In an autoclave, the ionic liquid and physical absorption solvent mixture was exposed to a carbon dioxide and methane gas mixture, 2068 kPa (300 psi) of 10 mol% CO₂/CH₄. The mixture is stirred for 1 hour at room temperature, and then a sample from the gas headspace is taken and analyzed.

The DEPG and NMP ionic liquid mixtures performed better than methanol ionic liquid mixtures at each solvent wt% for the imidazolium ionic liquids. Methanol and ionic liquid mixtures performed better than NMP or DEPG ionic liquid mixtures at each solvent wt% for the phosphonium ionic liquids. Adding a small amount of ionic liquid unexpectedly increased the performance of the absorption solvent. These results lead to a conclusion that combination of physical absorption technology with ionic liquids increased the performance of the solvent used in the physical absorption.

### LABORATORY PROCEDURE

The ionic liquid and physical absorption solvent were combined and stirred until well mixed in a glass insert with a magnetic stir bar. The glass insert is then placed in a 75 mL Parr reactor. The reactor is flushed with nitrogen and pressurized with a carbon dioxide/methane gas mixture. After stirring for 1 hour, a gas sample of the headspace is removed for GC analysis.

### EXAMPLE WITH CO₂/CH₄

Tris(propyl/butyl)methylphosphonium acetate (2.20 g, 0.0087 mol) was added to DEPG (2.13 g, 0.0085 mol) in a glass insert for a 75 mL autoclave and stirred until well mixed with a magnetic stir bar. The 75 mL autoclave was loaded with the glass insert containing the ionic liquid mixture. The autoclave was flushed with nitrogen and then pressurized with 2068 kPa (300 psi) of a 10 mol% carbon dioxide/methane gas mixture. The mixture was stirred for an hour with a magnetic stir bar at 500 rpm. A sample of the headspace was obtained and submitted for GC analysis. Results indicated 22% of the carbon dioxide had been removed.

### EXAMPLE OF ISOTHERM EXPERIMENT

Tris(propyl/butyl)methylphosphonium acetate (2.92 g, 0.0100 mol) was added to DEPG (0.55 g, 0.0173 mol) in a glass insert for a 75 mL autoclave and stirred until well mixed with a magnetic stir bar. The 75 mL autoclave was loaded with the glass insert containing the ionic liquid mixture. The autoclave was flushed with nitrogen and then pressurized with the desired amount of carbon dioxide. The mixture was stirred 500 rpm until an equilibrium pressure was obtained. The observed decrease in pressure was attributed to the absorption of carbon dioxide.

### RESULTS

**TABLE 1:**

| Capacity of a Phosphonium Based Ionic Liquid and Physical Absorption Solvents | |
|---|---|
| Absorption Solvent | capacity (mol CO₂ removed/mol IL) |
| NMP • | 0.022 |
| DEPG • | 0.025 |
| MeOH • | 0.007 |
| PmixOAc + NMP (14 wt%) • | 0.094 |
| PmixOAc + MeOH (14 wt%) | 0.280 |
| PmixOAc + DEPG (13 wt%) | 0.142 |

| | |
|---|---|
| *2068 kPa (300 psi) of (10 mol%) CO₂/CH₄ added NMP=N -methylpyrrolidone DEPG= dimethylether of polyethylene glycol MeOH= methanol • = not within the scope of the invention | |

**TABLE 2:**

| Capacity of an Imidazolium Based Ionic Liquid and Physical Absorption Solvents | |
|---|---|
| Absorption Solvent | capacity (mol CO₂ removed/mol IL) |
| NMP • | 0.022 |
| DEPG • | 0.025 |
| MeOH • | 0.007 |
| bmimOAc + NMP (16 wt%) • | 0.289 |
| bmimOAc + MeOH (12 wt%) • | 0.235 |
| bmimOAc + DEPG(17 wt%) • | 0.289 |

| | |
|---|---|
| *2068 kPa (300 psi) of (10 mol%) CO₂/CH₄ added NMP=N -methylpyrrolidone DEPG= dimethylether of polyethylene glycol MeOH= methanol | |

In particular, it was found that ionic liquids increased the capacity of physical absorption solvents at low pressures of carbon dioxide. The type of solvent plays a role in the performance of the ionic liquid.

In the foregoing, all temperatures are set forth in degrees Celsius and, all parts and percentages are by weight, unless otherwise indicated.

## Claims

1. A composition comprising an ionic liquid and a physical absorption solvent;
wherein said physical absorption solvent is selected from the group consisting of dimethyl ether of polyethylene glycol and methanol; and wherein the ionic liquid is a phosphonium acetate ionic liquid.

2. A method of purifying a gas mixture comprising contacting said gas mixture with a mixture of an ionic liquid and a physical absorption solvent in an absorbent zone wherein said ionic liquid and physical absorption solvent mixture absorbs at least one component from said gas mixture, and the said ionic liquid and physical absorption solvent mixture is regenerated to remove said absorbed component or components;
wherein said physical absorption solvent is selected from the group consisting of dimethyl ether of polyethylene glycol and methanol; and wherein the ionic liquid is a phosphonium acetate ionic liquid.

3. The method of claim 2 wherein said mixture comprises from 5-95 vol% ionic liquid and from 5-95 vol% physical absorption solvent.

4. The method of claim 2 wherein said gas mixture comprises a carbon dioxide containing gas mixture.

## Patentansprüche

1. Zusammensetzung umfassend eine ionische Flüssigkeit und ein physikalisches Absorptionslösungsmittel;
wobei das physikalische Absorption Lösungsmittel aus der Gruppe ausgewählt ist bestehend aus Dimethylether von Polyethylenglycol und Methanol; und wobei die ionische Flüssigkeit eine ionische Phosphoniumacetatflüssigkeit ist.

2. Verfahren zum Reinigen einer Gasmischung, umfassend das Kontaktieren der Gasmischung mit einer Mischung einer ionischen Flüssigkeit und eines physikalischen Absorptionslösungsmittels in einer absorbierenden Zone, wobei die Mischung von ionischer Flüssigkeit und physikalischem Absorptionslösungsmittel mindestens eine Komponente aus der Gasmischung absorbiert und die Mischung von ionischer Flüssigkeit und physikalischem Absorptionslösungsmittel erzeugt wird, um die absorbierende Komponente oder Komponenten zu entfernen;
wobei das physikalische Absorptionslösungsmittel aus der Gruppe ausgewählt wird bestehend aus Dimethylether von Polyethylenglycol und Methanol; und wobei die ionische Flüssigkeit eine ionische Phosphoniumacetatflüssigkeit ist.

3. Verfahren nach Anspruch 2, wobei die Mischung 5-95 Vol.-% ionische Flüssigkeit und 5-95 Vol.-% physikalisches Absorptionslösungsmittel umfasst.

4. Verfahren nach Anspruch 2, wobei die Gasmischung eine Kohlendioxid enthaltenden Gasmischung umfasst.

## Revendications

1. Composition comprenant an liquide ionique et un solvant d'absorption physique ;
dans laquelle ledit solvant d'absorption physique est choisi dans le groupe constitué de l'éther diméthylique de polyéthylène glycol et du méthanol ; et dans laquelle le liquide ionique est un liquide ionique d'acétate de phosphonium.

2. Procédé de purification d'un mélange de gaz comprenant la mise en contact dudit mélange de gaz avec un mélange d'un liquide ionique et d'un solvant d'absorption physique dans une zone d'absorbant dans laquelle ledit mélange de liquide ionique et de solvant d'absorption physique absorbe au moins un composant dudit mélange de gaz, et ledit mélange de liquide ionique et de solvant d'absorption physique est régénéré pour éliminer ledit composant ou lesdits composants absorbés ;
dans lequel ledit solvant d'absorption physique est choisi dans le groupe constitué de l'éther diméthylique de polyéthylène glycol et du méthanol ; et dans lequel le liquide ionique est un liquide ionique d'acétate de phosphonium.

3. Procédé selon la revendication 2, dans lequel ledit mélange comprend de 5 à 95 % en volume de liquide ionique et de 5 à 95 % en volume de solvant d'absorption physique.

4. Procédé selon la revendication 2, dans lequel ledit mélange de gaz comprend un mélange de gaz contenant du dioxyde de carbone.
